(19) Europäisches Patentamt / European Patent Office / Office européen des brevets

(11) **EP 4 489 356 A1**

(12) **EUROPEAN PATENT APPLICATION**
published in accordance with Art. 153(4) EPC

(43) Date of publication:
**08.01.2025 Bulletin 2025/02**

(21) Application number: **23869589.4**

(22) Date of filing: **26.04.2023**

(51) International Patent Classification (IPC):
**H04L 25/02** (2006.01)     **G01S 5/06** (2006.01)

(52) Cooperative Patent Classification (CPC):
**G01S 5/06; H04L 25/02; H04W 4/02; H04W 4/021; H04W 4/029**

(86) International application number:
**PCT/CN2023/090963**

(87) International publication number:
**WO 2024/066334 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.09.2022 CN 202211186091**

(71) Applicant: ZTE Corporation
Shenzhen, Guangdong 518057 (CN)

(72) Inventors:
• **CHEN, Shijun**
  Shenzhen, Guangdong 518057 (CN)
• **LI, Junqiang**
  Shenzhen, Guangdong 518057 (CN)
• **CHEN, Dawei**
  Shenzhen, Guangdong 518057 (CN)
• **XIA, Shuqiang**
  Shenzhen, Guangdong 518057 (CN)

(74) Representative: **Boult Wade Tennant LLP**
**Salisbury Square House**
**8 Salisbury Square**
**London EC4Y 8AP (GB)**

(54) **WIRELESS SENSING METHOD AND APPARATUS, COMMUNICATION DEVICE, AND COMPUTER STORAGE MEDIUM**

(57) The present application provides a wireless sensing method, comprising: performing modeling according to a sensing signal received by antennas, determining a reference state of a sensing environment; calculating a difference between a current sensing signal and the reference state; and determining, according to the difference, a position parameter of a changing sensing object in the sensing environment. The present application further provides a wireless sensing apparatus, a communication device, and a computer storage medium.

Fig. 2

EP 4 489 356 A1

**Description**

CROSS-REFERENCE TO RELATED APPLICATIONS

The present application claims the priority of Chinese Patent Application No. 202211186091.3, filed on September 27, 2022, which is incorporated in its entirety herein by reference.

TECHNICAL FIELD

The present application relates to the technical field of wireless communication, and in particular to a wireless sensing method and apparatus, a communication device, and a computer storage medium.

BACKGROUND

In the era of the fourth industrial revolution, ubiquitous intelligence is a prominent feature. Ubiquitous intelligence technologies mainly include a ubiquitous sensing technology, a ubiquitous computing technology, and product development. Therefore, ubiquitous intelligence requires a ubiquitous system. But in current deployment systems, only a wireless communication network satisfies the ubiquity, so ubiquitous sensing and ubiquitous computing through the wireless communication network become the main feasible technical route.

Ubiquitous sensing has to be capable of sensing in a variety of complex scenarios, such as an indoor multipath environment, multiple above-ground buildings, a multi-vehicle environment, a multi-person shopping mall environment, and so on. However, research on sensing complex environments is scarce at present, and practicable commercial sensing technologies are fewer. Sensing the complex environments is a hot research topic in terms of standardization and academia, and is in the early stage of technological breakthroughs.

SUMMARY

In view of the above technical problems, the present application provides a wireless sensing method and apparatus, a communication device, and a storage medium, and aims to implement accurate sensing of a complex environment.

The present application provides a wireless sensing method. The wireless sensing method includes:

performing modeling according to a sensing signal received by antennas, and determining a reference state of a sensing environment;

calculating a difference between a current sensing signal and the reference state; and

determining, according to the difference, a position parameter of a changing sensing object in the sensing environment.

The present application further provides a wireless sensing apparatus. The wireless sensing apparatus includes:

a state determination module configured to perform modeling according to a sensing signal received by antennas, and determine a reference state of a sensing environment;

a difference calculation module configured to calculate a difference between a current sensing signal and the reference state; and

a position determination module configured to determine, according to the difference, a position parameter of a changing sensing object in the sensing environment.

The present application further provides a communication device. The communication device includes:

a memory, and one or more processors; where

the memory is configured to store one or more programs; and

when the one or more programs are executed by the one or more processors, the one or more processors are caused to implement the method according to any one of claims.

The present application further provides a computer storage medium, storing a computer program. The computer program implements the wireless sensing method according to any one of claims when executed by a processor.

According to the examples of the present application, an angle parameter and a time parameter of a sensing object are determined through determination of the reference state according to a difference signal between the current sensing signal and the reference state, such that a state of the sensing object and a sensing object moving in a complex environment can be sensed, and a position of the sensing object can be accurately and efficiently determined by excluding a complex and stable background from a complex scenario.

BRIEF DESCRIPTION OF DRAWINGS

The accompanying drawings herein are incorporated in the description as a constituent part of the description, illustrate examples conforming to the present application, and serve to explain the principles of the present application along with the description. In order to describe the technical solutions in examples of the present application more clearly, the accompanying drawings required for describing the examples are briefly described below. Obviously, those of ordinary skill in the art can also derive other accompanying drawings from these accompanying drawings without creative efforts.

Fig. 1 is a schematic diagram of an application scenario according to an example of the present application;
Fig. 2 is a schematic flowchart of Example 1 of a wireless sensing method according to an example of the present application;
Fig. 3 is a schematic flowchart of Example 2 of a wireless sensing method according to an example of the present application;
Fig. 4 is a schematic diagram of a reference states sensed by a state machine according to an example of the present application;
Fig. 5 is a schematic flowchart of Example 3 of a wireless sensing method according to an example of the present application;
Fig. 6 is a schematic flowchart of Example 4 of a wireless sensing method according to an example of the present application;
Fig. 7 is a schematic flowchart of Example 4 of a wireless sensing method according to an example of the present application;
Fig. 8 is a schematic diagram, shown in a manner as a signal, of calculating a difference signal in an application instance of an example of the present application;
Fig. 9 is a schematic diagram, shown in a manner as a delay and angle of arrival spectrum, of calculating a schematic signal in an application instance of an example of the present application;
Fig. 10 is a schematic diagram, shown in a manner as a signal, of calculating a difference signal in another application instance of an example of the present application;
Fig. 11 is a schematic diagram, shown in a manner as a delay and angle of arrival spectrum, of calculating a schematic signal in another application instance of an example of the present application; and
Fig. 12 is a schematic diagram of modules of a wireless sensing apparatus according to an example of the present application.

The implementation of the objectives, functional features and advantages of the present application will be further described in conjunction with examples and with reference to the accompanying drawings. Clear examples of the present application have been shown by means of the accompanying drawings, and will be described in greater detail hereinafter. These accompanying drawings and description are not intended to limit the scope of the concepts of the present application in any way, but rather to illustrate the concepts of the present application to those skilled in the art by reference to specific examples.

DETAILED DESCRIPTION OF THE INVENTION

Description will be made in detail to illustrative examples herein, and their instances are illustrated in the accompanying drawings. When the following description relates to the accompanying drawings, the same numbers in different accompanying drawings denote the same or similar elements, unless indicated otherwise. The embodiments described in the following examples do not denote all embodiments consistent with the present application. On the contrary, they are merely instances of an apparatus and a method consistent with some aspects of the present application as detailed in the appended claims.

It should be noted herein that the terms "comprise", "include", or their any other variations are intended to cover non-exclusive inclusion. Therefore, a process, method, product, or apparatus including a series of elements further includes other elements that are not explicitly listed except for those elements, or further includes elements inherent to such a process, method, product, or apparatus. Without further limitation, an element defined by a phrase "comprise a..." or "include a..." does not exclude the existence of another identical element in a process, method, article or apparatus including the element. Furthermore, components, features and elements with the same name in different examples of the present application may have the same meaning or not. Their specific meanings need to be determined by their explanation in the specific examples or in further combination with the context of the specific examples.

It should be understood that although the terms of first, second, third, etc. may be employed herein to describe various information, such information should not be limited to these terms. These terms are merely used to distinguish between the same type of information. For example, first information may also be referred to as second information, and similarly, second information may also be referred to as first information, without departing from the scope herein. Depending on the context, the word "if" as used herein can be interpreted as "in a case of", "when", or "in response to determining". Moreover, as used herein, singular forms "a/an", "one" and "the" are intended to include plural forms as well, unless otherwise indicated in the context clearly. It should be further understood that the terms "comprise" and "include" specify the presence of stated features, steps, operations, elements, components, items, kinds, and/or groups, but do not preclude the presence, appearance, or addition of one or more other features, steps, operations, elements, components, items, kinds, and/or groups. As used herein, the terms "or", "and/or", "comprise at least one of the following", "include at least one of the following", etc. can be interpreted as inclusive, or mean any one or any combination. For example, "comprise at least one of the following: A, B and C" means "any of the following: A; B; C; A and B; A and C; B and C; and A, B and C" and yet another example, "A, B or C" or "A, B and/or C" means "any of the following: A; B; C; A and B; A and C; B and C; and A, B and C". An exception to this definition occurs only when a combination of elements, functions, steps, or operations is inherently mutually exclusive in some way.

It should be understood that while all the steps in the flowcharts of the examples of the present application are shown sequentially as indicated by arrows, the steps are not necessarily executed sequentially in an order indicated by the arrows. Unless explicitly stated herein, an execution order of these steps is no strictly limited, and these steps can be executed in other orders. Moreover, at least some of the steps in the flowcharts can include a plurality of sub-steps or stages. These sub-steps or stages are not necessarily executed at the same time, but can be executed at different times. These sub-steps or stages are not necessarily executed sequentially, but can be executed in turn or alternately with other steps or at least some of sub-steps or stages of other steps.

Depending on the context, the word "if" as used herein can be interpreted as "in a case of", "when", "in response to determining" or "in response to detecting". Similarly, depending on the context, the phrase "if it is determined that" or "if it is detected that (a stated condition or event)" may be interpreted as "when it is determined that", "in response to determining that", "when it is detected that (a stated condition or event)" or "in response to detecting (a stated condition or event)".

It should be noted that step marks such as S10 and S20 are used herein for the purpose of expressing corresponding contents more clearly and concisely, and do not constitute a substantial limitation on the sequence. In specific implementation, those skilled in the art can execute S20 first and then execute S10, etc., but all of these should fall within the scope of protection of the present application.

It should be understood that the specific examples described herein are merely illustrative of the present application and are not intended to limit the present application.

In the following description, suffixes such as "module", "component" or "unit" used to denote elements are used only to facilitate the description of the present application and have no particular meaning in themselves. Thus, "module", "component" or "unit" can be used interchangeably.

The examples of the present application are implemented according to a communication system between base station antennas, and application scenarios of the present application are described below.

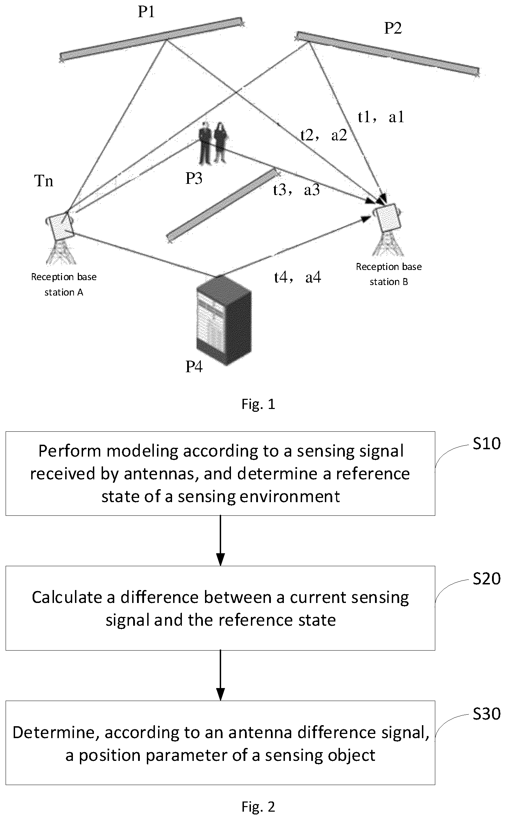

With reference to Fig. 1, Fig. 1 is a schematic diagram of an application scenario according to an example of the present application. A transmission base station A transmits a wireless wave signal to a reception base station B. The wireless wave signal may be a communication signal or a sensing signal. In a signal propagation process, if complex environments such as buildings and mountains exist between the transmission base station A and the reception base station B, the reception base station B receives signals arriving through a plurality of propagation paths through antennas, including a direct signal, a signal reflected by the environment, etc., and there are differences in time of arrival and angle of arrival between the received signals due to differences in propagation paths.

In an embodiment, the transmission base station A transmits a communication signal or a sensing signal in a set time Tn and on a radio resource. According to the complex environment shown in Fig. 1, the reception base station B receives signals arriving through four propagation paths, and two parameters, that is, time of arrival (TOA) and angle of arrival (AOA), can be obtained after a signal received by each propagation path is processed. During communication between the base stations, the received signals can be estimated to obtain the parameters of TOA and AOA, such that positions of sensing objects in the environment, such as specific positions of P1, P2, P3 and P4, can be determined according to the signal parameters of each path.

Therefore, accuracy of a position of a sensing target depends on measurement of the signal parameters of TOA and AOA, especially measurement accuracy of AOA has a great impact on position sensing, and the farther the distance is, the greater the error is. However, most mobile communication base stations are deployed in complex multipath environments. In order to improve the measurement accuracy of the signal parameters of TOA and AOA, the present application provides a new TOA and AOA joint estimation solution. The joint estimation solution provided in the example of the present application can be applied to object sensing in any environment, especially complex sensing environments.

With reference to Fig. 2, Fig. 2 is a schematic flowchart of Example 1 of a wireless sensing method according to an example of the present application. The wireless sensing method may includes:
S10: modeling is performed according to a sensing signal received by antennas, and a reference state of a sensing environment is determined.

In some examples, the reference state of the antennas is a steady state under a current sensing environment. The steady state herein refers to a relatively stable state, that is, the reference state changes with change of the sensing environment. If the current sensing environment does not change, the reference state remains unchanged. If the current sensing environment changes, the reference state is the steady state before the sensing environment changes.

In some examples, the sensing signal received by the antennas is a superposition of sensing signals received by the antennas through multiple paths. As shown in Fig. 1, the sensing signal transmitted from the transmission base station A arrives through four propagation paths, such that the sensing signal received by the antennas is a superposition of signals arriving through four paths.

In some examples, the antennas are an antenna array, and the reference state of the sensing environment includes a steady state sensed by each antenna of the antenna array. That is, each antenna of the antenna array receives a sensing signal, and each antenna has a corresponding steady state. For example, the base station has 32 or 64 antennas for receiving and transmitting signals, and when each antenna in the 32 or 64 antennas senses the steady state of the current environment, the reference state of the sensing environment is determined. The reference state of the sensing environment includes steady states sensed by all antennas of the antenna array.

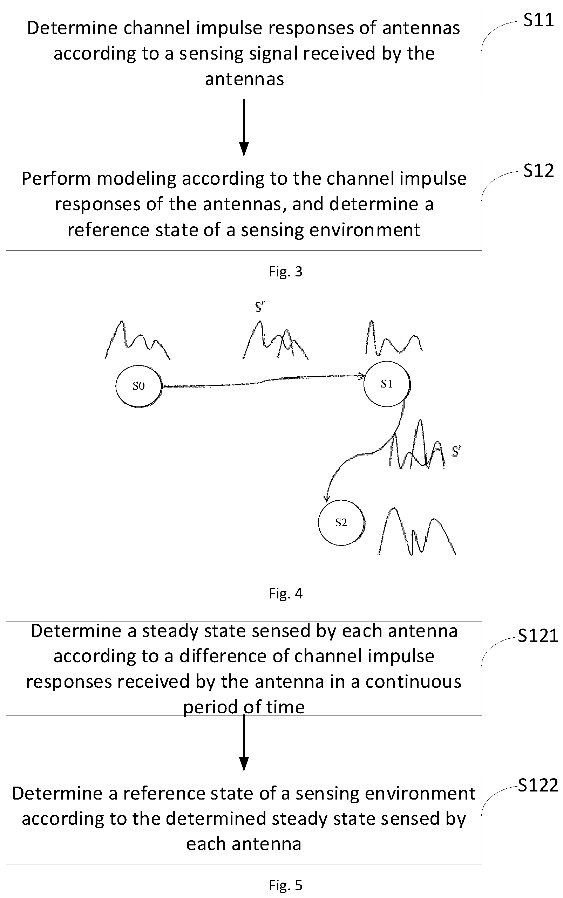

In some examples, with reference to Fig. 3, Fig. 3 is a schematic flowchart of Example 2 of a wireless sensing method according to an example of the present application. S10 may include:
S11: channel impulse responses of the antennas are determined according to the sensing signal received by the antennas.

In some examples, the channel impulse responses of the antennas are vector values of the channel impulse responses of the antennas determined according to the sensing signal received by the antennas. The antennas of the base station are an antenna array composed of a plurality of antenna element. The base station receives wireless waves through the antenna elements. For example, the base station includes 64 antennas. The 64 antennas are distributed in rows and columns to form an antenna array with 8 rows and 8 columns. Each antenna can receive the transmitted wireless sensing signal. Thus, the channel impulse response of each antenna can be expressed as $R_{m,n}(t)$, m and n are antenna element numbers in the antenna array, $m \in [0, M-1]$, and $n \in [0, N-1]$. The channel impulse response of each antenna can be determined according to the sensing signal received by each antennas.

In some examples, the channel impulse responses of the antennas are determined by sampling the sensing signal received by the antennas at a sampling period.
S12: the modeling is performed according to the channel impulse responses of the antennas, and the reference state of the sensing environment is determined.

In some examples, a state machine is used to perform real-time sensing modeling according to channel impulse responses received by the antennas at different moments, so as to output steady states sensed by the antennas. The state machine is provided with a timer having a preset time threshold. Each antenna of the antenna array corresponds to one state machine. Alternatively, a plurality of antennas correspond to one state machine. Each state machine has an initial state S0. The timer is set to be 0 and starts timing. Within a preset time threshold, the state machine starts to perform real-time sensing modeling according to the channel impulse responses received at different times, so as to sense whether the current environment is in a steady state. Each state machine performs real-time sensing modeling according to the received channel impulse response of the sensing signal. When sensing that the current environment is in a steady state and is different from the previously determined steady state, the currently sensed steady state is taken as a new reference state. With reference to Fig. 4, Fig. 4 is a schematic diagram of a reference states sensed by a state machine according to an example of the present application. The initial state S0 of the sensing environment is the steady state of the current environment. When the environment changes, the changed state of the environment is sensed, that is, a temporary state S'. After a period of time, it is sensed that the environment is in a steady state, and the steady state is not similar to the previous initial state S0, and the currently sensed steady state is taken as a new reference state, that is, S1. Similarly, the state machine performs real-time sensing modeling according to the received channel impulse response of the sensing signal, senses a state of the current environment, and stores the sensed steady state when sensing that the current environment is in a steady state.

Accordingly, in some examples, a step for determining the reference state of the sensing environment may further includes: steady states sensed by all state machines within a period of time are obtained, and if all state machines sense steady states, a state array is formed according to the steady states sensed by all the state machines as the reference state of the sensing environment.

In some examples, since the state machine can sense the state change of the current environment, S20 is executed when a state change of the current environment is sensed in the example of the present application.

In some examples, with reference to Fig. 5, Fig. 5 is a schematic flowchart of Example 3 of a wireless sensing method according to an example of the present application. S12 includes:

S121: the steady state sensed by each antenna is determined according to a difference of channel impulse responses received by the antenna in a continuous period of time.

In some examples, a length T of the continuous period of time is greater than or equal to a preset time threshold. The preset time threshold may be a value flexibly set according to an environment.

In some examples, S121 may include:

S121a: a difference of channel impulse responses received by a same antenna at a first moment and a second moment is calculated, where the second moment and the first moment are any two moments in the continuous period of time.

S121b: any channel impulse response received by the antenna in the continuous period of time is updated as the steady state sensed by the antenna when it is determined that the difference of the channel impulse responses received by the same antenna at the first moment and the second moment is less than a preset difference threshold.

In some examples, the first moment and the second moment are any two adjacent moments within a continuous period of time. With a first antenna $R_{1,1}(t)$ of the antenna array as an example, a value range of t is [0, T].

If $|R_{1,1}(0) - R_{1,1}(1)| \leq R_{th}$, $|R_{1,1}(1) - R_{1,1}(2)| \leq R_{th}$, $|R_{1,1}(2) - R_{1,1}(3)| \leq R_{th}$, ......, $|R_{1,1}(T-1) - R_{1,1}(T)| \leq R_{th}$, a channel impulse response received at any time point in the continuous period of time is regarded as the steady state sensed by the antenna.

In some other examples, the first moment is an initial moment within a continuous period of time, and the second moment is any moment other than the initial moment within the continuous period of time. With a first antenna $R_{1,1}(t)$ of the antenna array as an example, a value range of t is [0, T].

If $|R_{1,1}(0) - R_{1,1}(1)| \leq R_{th}$, $|R_{1,1}(0) - R_{1,1}(2)| \leq R_{th}$, $|R_{1,1}(0) - R_{1,1}(3)| \leq R_{th}$, ......, $|R_{1,1}(0) - R_{1,1}(T)| \leq R_{th}$, a channel impulse response received at any moment in the continuous period of time is regarded as the steady state sensed by the antenna.

In still some examples, the first moment and the second moment are any two moments within a continuous period of time. That is, difference calculation is performed on the channel impulse responses received at every two moments in a continuous period of time. When a difference of the channel impulse responses received at every two moments is lower than a preset difference threshold, the channel impulse response received at any moment in the continuous period of time is regarded as a steady state sensed by the antenna.

The steady states sensed by other antennas of the antenna array are implemented with reference to the method for the first antenna.

S122: the reference state of the sensing environment is determined according to the determined steady state sensed by each antenna.

In an embodiment, when all antennas sense steady states in the continuous period of time, the reference state of the sensing environment is determined according to the state array formed by the steady states sensed by all the antennas.

In some other examples, the difference in S121 may be replaced by similarity or correlation. For example, similarity of channel impulse responses received in a continuous period of time is calculated to determine the steady state sensed by the antenna. The similarity of channel impulse responses received at any two time points in a continuous period of time is calculated. The steady state sensed by the antennas is determined when all the similarity is greater than a preset similarity threshold, that is, the channel impulse response received at any time point in the continuous period of time is taken as the steady state sensed by the antenna.

Calculation of the similarity of the channel impulse responses received at any two moments includes, but is not limited to, the following solution:

1. a correlation value between channel impulse responses received by the antenna at any two moments in a continuous period of time is calculated, and a maximum correlation peak value is taken as a similarity contrast.
2. an angle between channel impulse responses received by the antenna at any two moments in a continuous period of time is calculated, and a cosine of the angle is used as a similarity contrast.

S20: a difference between a current sensing signal and the reference state is calculated.

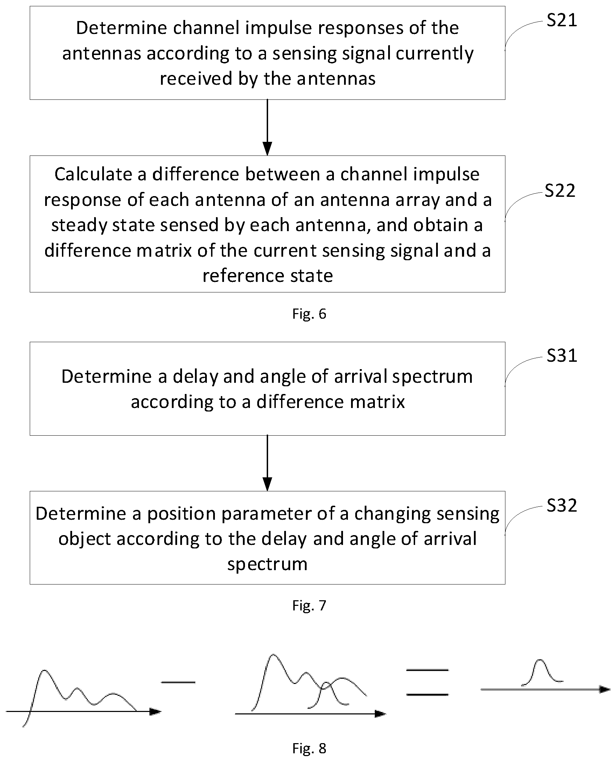

In some examples, with reference to Fig. 6, Fig. 6 is a schematic flowchart of Example 4 of a wireless sensing method according to an example of the present application. S20 includes:

S21: a channel impulse response of each antenna is determined according to a sensing signal currently received by the antenna.

In an embodiment, a transmission base station transmits a sensing signal in a set time TN and on a wireless resource. After receiving the sensing signal, a reception base station samples an antenna signal to obtain a channel impulse response of the antenna. In an example, the antennas are an antenna array composed of a plurality of antenna elements. Thus, the determined channel impulse responses of the antennas are also an array composed of the channel impulse responses of all the antennas. The channel impulse response of each antenna is expressed as $R_{m,n}(t)$, m and n are antenna element numbers in the antenna array, $m \in [0, M -1]$, $n \in [0, N - 1]$, and t is a current moment.

S22: a difference between a channel impulse response of each antenna of the antenna array and a steady state sensed by each antenna is calculated, and the difference matrix of the current sensing signal and the reference state is obtained.

In an example, the antennas are an antenna array. The difference between the current sensing signal and the reference state includes the difference between the channel impulse response of each antenna of the antenna array and the steady state sensed by each antenna. Moreover, the difference between the channel impulse response and the steady state is calculated based on the same antenna.

S30: a position parameter of a sensing object is determined according to an antenna difference signal.

In some examples, with reference to Fig. 7, Fig. 7 is a schematic flowchart of Example 4 of a wireless sensing method according to an example of the present application. S30 includes:
S31: a delay and angle of arrival spectrum is determined according to the difference matrix.

In the delay and angle of arrival spectrum, a horizontal axis represents time, and a vertical axis represents angle. In an example, calculation is performed based on the difference matrix, and a delay and angle of arrival spectrum is determined. Steps may specifically include:
S31a: a phase adjustment value of each antenna at different angles is determined.

In some examples, for better signal reception, each antenna may have a corresponding phase adjustment parameter when the antenna array is at different angles. Therefore, phase adjustment values for each antenna are determined for different angles of the antenna array. A range of the angle is $(-\pi, \pi)$.

S31b: a product of a difference vector of each antenna of the difference matrix and a phase adjustment value of each antenna corresponding to a same angle is calculated, a difference vector after phase adjustment is obtained, then difference vectors of all antennas after phase adjustment are summed, and a vector value corresponding to a current angle is obtained.

With an angle θ as an example, the product of the difference vector of the same antenna and the phase adjustment value is calculate separately, the difference vector after phase adjustment is obtained, then the difference vectors obtained after adjustment of all antennas are summed, and the vector value corresponding to the angle θ is obtained, that is, a value corresponding to a current moment t and the angle θ in the delay and angle of arrival spectrum.

S31c: a matrix is formed according to vector values corresponding to all angles, and the delay and angle of arrival spectrum is formed.

All angles refer to all angles obtained by traversing within determined azimuth angle range and pitch angle range according to a specified step size. For example, after vector values corresponding to all angles in $(-\pi, \pi)$ are calculated, the calculated vector values corresponding to all angles are formed into a matrix, such that a delay and angle of arrival spectrum is obtained.

S32: the position parameter of the changing sensing object is determined according to the delay and angle of arrival spectrum.

In some examples, S32 includes:

it is determined, according to the delay and angle of arrival spectrum, that the sensing signal is capable of undergoing path separation, and an angle parameter and a time parameter of the sensing object on each path is determined; and/or
it is determined, according to the delay and angle of arrival spectrum, that the sensing signal is incapable of undergoing path separation, and an angle parameter and a time parameter of the sensing object on each path are determined according to quantity estimation of the sensing path in the delay and angle of arrival spectrum.

In an embodiment, after the delay and angle of arrival spectrum is obtained, whether path separation can be performed on the sensing signal received by the antenna may be determined based on the delay and angle of arrival spectrum. If path separation can be performed, the angle parameter and the time parameter of the sensing object on each path are determined according to the delay and angle of arrival spectrum of each path. In some examples, the angle parameter and the time parameter of each path are determined according to a maximum value within an ambiguity range of each path in the delay and angle of arrival spectrum.

If path separation cannot be performed, estimation is performed according to the quantity of the sensing object in the delay and angle of arrival spectrum, and an angle parameter and a time parameter of the sensing object on each path are obtained. In some examples, if path separation cannot be performed, the obtained delay and angle of arrival spectrum is analyzed to determine the quantity of sensing objects, such that optimal estimation is performed according to the determined quantity of sensing object, and the angle parameter and the time parameter of the sensing object on each path are obtained.

According to the examples of the present application, an angle parameter and a time parameter of a sensing object are determined through determination of the reference state according to a difference signal between the current sensing signal and the reference state, such that a state of the sensing object and a sensing object moving in a complex environment can be sensed, and a position of the sensing object can be accurately and efficiently determined by excluding a complex and stable background from a complex scenario.

When the example of the present application is applied to specific environment sensing, an angle parameter and a time parameter of a changed sensing object can be accurately obtained.

Specific application instance 1

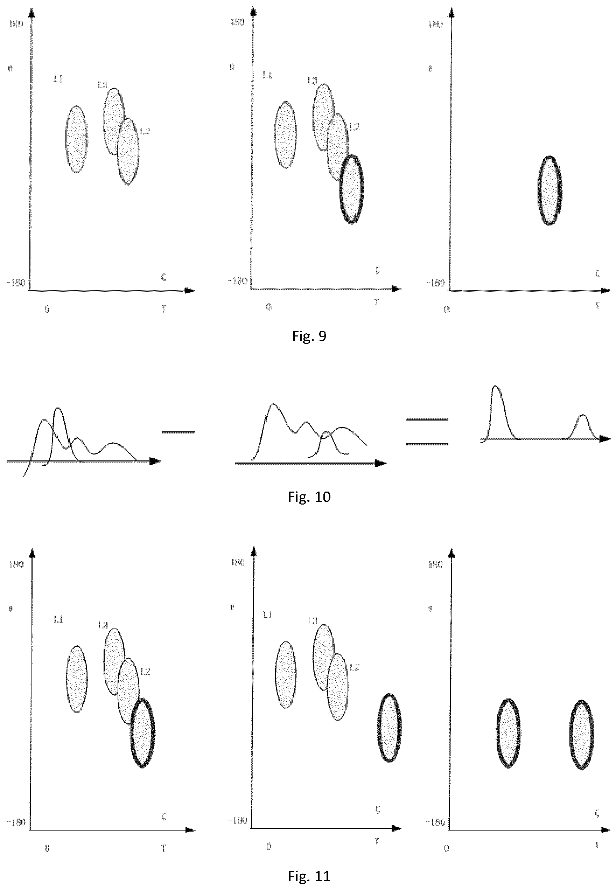

A synchronized sensing signal transmission base station transmits a sensing signal in a set time and on a wireless resource. A sensing signal reception base station receives the sensing signal. A received signal of each antenna is sampled, and a channel impulse response vector of each antenna is obtained as $R_{m,n}(t)$ according to a transmitted signal. Based on the sensing signal received by the reception base station, it can be determined that a sensing environment is in a steady state and there is no sensing object, and an initial reference state S is recorded. As shown in Figs. 8 and 9, a first diagram in Fig. 8 shows a sensing signal corresponding to a steady state. In order to more intuitively show a sensing process, a first diagram in Fig. 9 uses the delay and angle of arrival spectrum for demonstration.

When an unmanned aerial vehicle enters a current sensing region for a period of time, a current sensing signal is shown in a second diagram in Fig. 8, and a red circle in a second diagram in Fig. 9 denotes the delay and angle spectrum of the sensed environment including the unmanned aerial vehicle.

According to the currently received sensing signal and the initial reference state S, a difference signal $\Delta_{m,n}$ can be obtained by the following calculation formula.

$$\Delta_{m,n}(t) = R_{m,n}(t) - S$$

As shown in a third diagram in Fig. 8, interference of a background target by the sensing object can be eliminated by calculating a difference between the currently received sensing signal and the reference state S, such that the sensing object can be accurately analyzed.

The difference signal is analyzed to obtain a delay and angle of arrival spectrum, such as the delay and angle of arrival spectrum shown in a third graph of Fig. 9.

$$\Gamma(\tau,\theta) = <(R_{1,1}(t), ......, R_{m,n}(t)), (\alpha(\theta(1, 1)), ......, \alpha(\theta(m, n)))>$$

Since the delay and angle of arrival spectrum at this moment only contains information of the newly entering sensing object (unmanned aerial vehicle), an angle of arrival and an arrival time of the changing sensing object can be accurately obtained based on the analysis of the delay and angle of arrival spectrum.

Specific application instance 2

A synchronized sensing signal transmission base station transmits a sensing signal in a set time and on a wireless resource. A sensing signal reception base station receives the sensing signal. A received signal of each antenna is sampled, and a channel impulse response vector of each antenna is obtained as $R_{m,n}(t)$ according to a transmitted signal. Based on the sensing signal received by the reception base station, it can be determined that a sensing environment is in a steady state and there is a sensing object, and an initial reference state S is recorded. As shown in Figs. 10 and 11, a first diagram in Fig. 10 shows a sensing signal corresponding to a steady state. In order to more intuitively show a sensing process, a first diagram in Fig. 11 uses the delay and angle of arrival spectrum for demonstration, and a red circle denotes a delay and angle spectrum of a sensed vehicle.

When the sensing vehicle moves in a current sensing region for a period of time, a current sensing signal is shown in a second diagram in Fig. 10, and a red circle in a second diagram in Fig. 11 denotes a delay and angle spectrum of the sensed vehicle moving in the environment.

According to the currently received sensing signal and the initial reference state S, a difference signal $\Delta_{m,n}$ can be obtained by the following calculation formula.

$$\Delta_{m,n}(t) = R_{m,n}(t) - S$$

As shown in a third diagram in Fig. 10, interference of a background target by the sensing object can be eliminated by calculating a difference between the currently received sensing signal and the reference state S, such that the sensing object can be accurately analyzed.

The difference signal is analyzed to obtain a delay and angle of arrival spectrum, such as the delay and angle of arrival spectrum shown in a third graph of Fig. 11.

$$\Gamma(\tau,\theta) = <(R_{1,1}(t), ......, R_{m,n}(t)), (\alpha(\theta(1, 1)), ......, \alpha(\theta(m, n)))>$$

Since the delay and angle of arrival spectrum at this moment only contains information of the newly entering sensing object (unmanned aerial vehicle), an angle of arrival and an arrival time of the changing sensing object can be accurately obtained based on the analysis of the delay and angle of arrival spectrum.

The instances listed above are only reference instances. In order to avoid redundancy, other instances are not listed one by one herein. In actual development or application, flexible combinations can be made according to actual needs. However, any combination belongs to the technical solutions of the present application and is covered in the scope of protection of the present application.

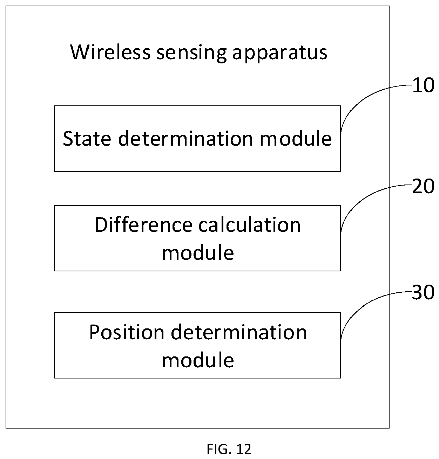

As shown in Fig. 12, the examples of the present application further provide a wireless sensing apparatus for a changing object in a complex environment. The wireless sensing apparatus includes: a type determination module configured to determine a state type of a sensing object based on sensing modeling;

a state determination module configured to perform modeling according to a sensing signal received by antennas, and determine a reference state of a sensing environment;
a difference calculation module configured to calculate a difference between a current sensing signal and the reference state; and
a position determination module configured to determine, according to the difference, a position parameter of a changing sensing object in the sensing environment.

Reference is made to the above-mentioned examples for a principle for implementing sensing in the example, which is not repeated herein.

Moreover, the examples of the present application further provide a communication device. The communication device includes a memory, a processor, and a wireless sensing program stored in the memory and operable on the processor. The wireless sensing program implements the wireless sensing method described in the above examples when executed by the processor.

Since the wireless sensing program uses all the technical solutions of all the foregoing examples when executed by the processor, it has at least all the beneficial effects produced by all the technical solutions of all the foregoing examples, which will not be repeated herein.

Moreover, the examples of the present application further provide a computer-readable storage medium. The computer-readable storage medium stores a wireless sensing program. The wireless sensing program implemented the wireless sensing method described in the above examples when executed by a processor.

Since the wireless sensing program uses all the technical solutions of all the foregoing examples when executed by the processor, it has at least all the beneficial effects produced by all the technical solutions of all the foregoing examples, which will not be repeated herein.

It can be understood that the above scenarios are only instances, and do not constitute limitations on application scenarios of the technical solutions provided in the examples of the present application, and the technical solutions of the present application can also be applied to other scenarios. For example, those of ordinary skill in the art will know that the technical solutions provided in the examples of the present application are also applicable to similar technical problems along with evolution of a system architecture and emergence of new service scenes.

The serial numbers of the above examples of the present application are merely for description and do not represent the superior and inferior of the examples.

The steps in the method of the examples of the present application can be sequentially adjusted, merged and deleted according to actual needs.

The units in the device of the examples of the present application may be merged, divided and deleted according to actual needs.

In the present application, the same or similar term concepts, technical solutions and/or application scenario descriptions are generally described in detail only when they appear for the first time. When they appear repeatedly subsequently, they are generally not repeated for brevity. For the same or similar term concepts, technical solutions and/or application scenario descriptions, etc. that are not described in detail later, reference may be made to the relevant detailed descriptions before them for understanding the technical solutions, etc. of the present application.

In the present application, the description of each example has its own emphasis. Reference may be made to the relevant descriptions of other examples for the part not described or recorded in detail in a given example.

All technical features in the technical solutions of the present application can be combined with one another randomly. In order to make the description concise, not all possible combinations of all the technical features in the above examples are described. However, as long as there is no contradiction between the combinations of these technical features, the combinations should be deemed as falling within the scope of the present application.

Through the description of embodiments, those skilled in the art can clearly understand that the method of the above example may be implemented in combination of software and a necessary general-purpose hardware platform and may also be certainly implemented through hardware. However, the former is a preferred embodiment in many cases. According to such understanding, the technical solution in essence of the present application or the part that contributes to the prior art can be embodied in the form of software products. The computer software product is stored in an above storage medium (such as a read-only memory (ROM)/a random access memory (RAM), a magnetic disk, or an optical disk), and includes several instructions to make a terminal device (such as a mobile phone, a computer, a server, a controlled terminal, or a network device) execute the method in each example of the present application.

The examples described above can be implemented in whole or in part by software, hardware, firmware, or their any combinations. When implemented through the software, all or some of the modules may be implemented in the form of computer program products. The computer program product includes one or more computer instructions. When loaded and executed on a computer, the computer program instruction generates in whole or in part the flows or functions described in accordance with the examples of the present application. The computer may be a general purpose computer, a special purpose computer, a computer network, or other programmable apparatuses. The computer instruction may be stored in a computer-readable storage medium or transmitted from one computer-readable storage medium to another computer-readable storage medium. For example, the computer instruction can be transmitted from one website, computer, server, or data center to another website, computer, server, or data center in a wired form (for example, a coaxial cable, an optical fiber, and a digital subscriber line) or a wireless form (for example, infrared rays, radio, and microwaves). The computer-readable storage medium may be any available medium that can be accessed by a computer or a data storage device including one or more available media integrated as a server, data center, etc. The available medium may be a magnetic medium (for example, a floppy disk, a memory disc, or a tape), an optical medium (for example, a digital video disk (DVD)), or a semiconductor medium (for example, a solid state disk (SSD)), etc.

What are described above are only optional examples of the present application, and do not limit the patent scope of the present application. Any equivalent structure or equivalent process transformation made on the basis of the contents of the description and drawings of the present application or directly or indirectly applied to other related technical fields is similarly included in the patent protection scope of the present application.

**Claims**

1.  A wireless sensing method, comprising:

    performing modeling according to a sensing signal received by antennas, and determining a reference state of a sensing environment;
    calculating a difference between a current sensing signal and the reference state; and
    determining, according to the difference, a position parameter of a changing sensing object in the sensing environment.

2.  The method according to claim 1, wherein the antennas are an antenna array, and the reference state of the sensing environment comprises a steady state sensed by each antenna of the antenna array.

3.  The method according to claim 2, wherein the performing modeling according to a sensing signal received by antennas, and determining a reference state of a sensing environment comprise:

    determining channel impulse responses of the antennas according to the sensing signal received by the antennas; and
    performing the modeling according to the channel impulse responses of the antennas, and determining the reference state of the sensing environment.

4.  The method according to claim 3, wherein the performing the modeling according to the channel impulse responses of the antennas, and determining the reference state of the sensing environment comprise:

    determining the steady state sensed by each antenna according to a difference of channel impulse responses received by the antenna in a continuous period of time; and
    determining the reference state of the sensing environment according to the determined steady state sensed by each antenna.

5. The method according to claim 4, wherein a length of the continuous period of time is greater than or equal to a preset time threshold.

6. The method according to claim 4, wherein the determining the steady state sensed by each antenna according to a difference of channel impulse responses received by the antenna in a continuous period of time comprises:

calculating a difference of channel impulse responses received by a same antenna at a first moment and a second moment, wherein the second moment and the first moment are any two moments in the continuous period of time; and

updating any channel impulse response received by the antenna in the continuous period of time as the steady state sensed by the antenna when it is determined that the difference of the channel impulse responses received by the same antenna at the first moment and the second moment is less than a preset difference threshold.

7. The method according to any one of claims 2-6, wherein the calculating a difference between a current sensing signal and the reference state comprises:

determining channel impulse responses of the antennas according to the sensing signal currently received by the antennas; and

calculating a difference between a channel impulse response of each antenna of the antenna array and a steady state sensed by each antenna, and obtaining the difference matrix of the current sensing signal and the reference state.

8. The method according to claim 7, wherein the determining, according to the difference, a position parameter of a changing sensing object comprises:

determining a delay and angle of arrival spectrum according to the difference matrix; and

determining the position parameter of the changing sensing object according to the delay and angle of arrival spectrum.

9. The method according to claim 8, wherein the determining a delay and angle of arrival spectrum according to the difference matrix comprises:

determining phase adjustment parameters of each antenna at different angles;

calculating a product of a difference vector of each antenna of the difference matrix and a phase adjustment value of each antenna corresponding to a same angle, obtaining a difference vector after phase adjustment, then summing difference vectors of all antennas after phase adjustment, and obtaining a vector value corresponding to a current angle; and

forming a matrix according to vector values corresponding to all angles, and forming the delay and angle of arrival spectrum.

10. The method according to claim 8, wherein the determining the position parameter of the changing sensing object according to the delay and angle of arrival spectrum comprises:

determining, according to the delay and angle of arrival spectrum, that the sensing signal is capable of undergoing path separation, and determining an angle parameter and a time parameters of the sensing object on each path; and/or

determining, according to the delay and angle of arrival spectrum, that the sensing signal is incapable of undergoing path separation, and determining an angle parameter and a time parameter of the sensing object on each path according to quantity estimation of the sensing object in the delay and angle of arrival spectrum.

11. The method according to claim 10, wherein the angle parameter and the time parameter of each path are determined according to a maximum value within an ambiguity range of each path when the sensing signal is capable of undergoing the path separation.

12. A wireless sensing apparatus, comprising:

a state determination module configured to perform modeling according to a sensing signal received by antennas, and determine a reference state of a sensing environment;

a difference calculation module configured to calculate a difference between a current sensing signal and the reference state; and

a position determination module configured to determine, according to the difference, a position parameter of a changing sensing object in the sensing environment.

13. A communication device, comprising:

a memory, and one or more processors;

wherein the memory is configured to store one or more programs; and

when the one or more programs are executed by the one or more processors, the one or more processors are caused to implement the method according to any one of claims 1-11.

14. A computer storage medium, storing a computer program, wherein the computer program implements the wireless sensing method according to any one of claims 1-11 when executed by a processor.

P1

P2

t1，a1

t2，a2

Tn        P3

t3，a3

Reception base
station A

t4，a4

Reception base
station B

P4

Fig. 1

| |
|---|
| Perform modeling according to a sensing signal received by antennas, and determine a reference state of a sensing environment |

S10

| |
|---|
| Calculate a difference between a current sensing signal and the reference state |

S20

| |
|---|
| Determine, according to an antenna difference signal, a position parameter of a sensing object |

S30

Fig. 2

Determine channel impulse responses of antennas according to a sensing signal received by the antennas — S11

Perform modeling according to the channel impulse responses of the antennas, and determine a reference state of a sensing environment — S12

Fig. 3

Fig. 4

Determine a steady state sensed by each antenna according to a difference of channel impulse responses received by the antenna in a continuous period of time — S121

Determine a reference state of a sensing environment according to the determined steady state sensed by each antenna — S122

Fig. 5

Determine channel impulse responses of the antennas according to a sensing signal currently received by the antennas — S21

Calculate a difference between a channel impulse response of each antenna of an antenna array and a steady state sensed by each antenna, and obtain a difference matrix of the current sensing signal and a reference state — S22

Fig. 6

Determine a delay and angle of arrival spectrum according to a difference matrix — S31

Determine a position parameter of a changing sensing object according to the delay and angle of arrival spectrum — S32

Fig. 7

Fig. 8

Fig. 9

Fig. 10

Fig. 11

Wireless sensing apparatus

State determination module — 10

Difference calculation module — 20

Position determination module — 30

FIG. 12

<table>
<tr><td colspan="2">**INTERNATIONAL SEARCH REPORT**</td><td colspan="2">International application No.<br>**PCT/CN2023/090963**</td></tr>
</table>

**A.    CLASSIFICATION OF SUBJECT MATTER**

H04L 25/02(2006.01)i；  G01S 5/06 (2006.01)i

According to International Patent Classification (IPC) or to both national classification and IPC

**B.    FIELDS SEARCHED**

Minimum documentation searched (classification system followed by classification symbols)

IPC:H04L,G01S

Documentation searched other than minimum documentation to the extent that such documents are included in the fields searched

Electronic data base consulted during the international search (name of data base and, where practicable, search terms used)

CNKI, DWPI, CNTXT, ENTXT: 比较, 变化, 不变, 参考, 状态, 差别, 差量, 差异, 差值, 冲击响应, 脉冲响应, 传播, 路径, 到达角度, 到达时间, 定位, 位置, 对比, 对象, 多径, 方位, 方向, 分离, 感测, 感知, 环境, 建模, 角, 目标, 确定, 时间, 天线, 稳定, 平稳, 相关度, 相关性, 相似, 信号, AOA, CIR, TOA, comparison, variation, unchanged, reference, state, difference, impact response, impulse response, propagation, path, angle of arrival, time of arrival, location, contrast, object, multipath, azimuth, direction, orientation, separation, sensing, perception, environment, change, modeling, angle, path separation, target, determine, time, antenna, stabilization, correlation, similarity, signal

**C.    DOCUMENTS CONSIDERED TO BE RELEVANT**

| Category* | Citation of document, with indication, where appropriate, of the relevant passages | Relevant to claim No. |
|---|---|---|
| X | US 2016018508 A1 (ORIGIN WIRELESS COMMUNICATIONS, INC.) 21 January 2016 (2016-01-21)<br>      description, paragraphs [0051]-[0164] | 1-8, 10-14 |
| A | CN 113541744 A (INSTITUTE OF SOFTWARE, CHINESE ACADEMY OF SCIENCES) 22 October 2021 (2021-10-22)<br>      entire document | 1-14 |
| A | US 2022043103 A1 (INVENTIO AG) 10 February 2022 (2022-02-10)<br>      entire document | 1-14 |
| A | US 2022011394 A1 (TELEFONAKTIEBOLAGET LM ERICSSON (PUBL)) 13 January 2022 (2022-01-13)<br>      entire document | 1-14 |

☐ Further documents are listed in the continuation of Box C.        ☑ See patent family annex.

| | |
|---|---|
| *    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **17 July 2023** | **21 July 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

<table>
<tr><td colspan="2" align="center"><strong>INTERNATIONAL SEARCH REPORT</strong><br><strong>Information on patent family members</strong></td><td colspan="2">International application No.<br><strong>PCT/CN2023/090963</strong></td></tr>
<tr><td align="center">Patent document<br>cited in search report</td><td align="center">Publication date<br>(day/month/year)</td><td align="center">Patent family member(s)</td><td align="center">Publication date<br>(day/month/year)</td></tr>
<tr><td>US            2016018508        A1</td><td>21 January 2016</td><td>US            2019097865        A1</td><td>28 March 2019</td></tr>
<tr><td></td><td></td><td>US            2018351775        A1</td><td>06 December 2018</td></tr>
<tr><td></td><td></td><td>US            2019158340        A1</td><td>23 May 2019</td></tr>
<tr><td></td><td></td><td>EP            3492946        A1</td><td>05 June 2019</td></tr>
<tr><td></td><td></td><td>EP            3879298        A2</td><td>15 September 2021</td></tr>
<tr><td></td><td></td><td>US            2018131554        A1</td><td>10 May 2018</td></tr>
<tr><td></td><td></td><td>EP            3492945        A1</td><td>05 June 2019</td></tr>
<tr><td></td><td></td><td>US            2017188359        A1</td><td>29 June 2017</td></tr>
<tr><td></td><td></td><td>US            2019020530        A1</td><td>17 January 2019</td></tr>
<tr><td></td><td></td><td>US            2019028320        A1</td><td>24 January 2019</td></tr>
<tr><td></td><td></td><td>WO            2017155634        A1</td><td>14 September 2017</td></tr>
<tr><td></td><td></td><td>CN            109073389        A1</td><td>21 December 2018</td></tr>
<tr><td></td><td></td><td>EP            3426148        A1</td><td>16 January 2019</td></tr>
<tr><td></td><td></td><td>JP            2019111321        A</td><td>11 July 2019</td></tr>
<tr><td></td><td></td><td>JP            2022028703        A</td><td>16 February 2022</td></tr>
<tr><td></td><td></td><td>US            2019166030        A1</td><td>30 May 2019</td></tr>
<tr><td></td><td></td><td>US            2019007256        A1</td><td>03 January 2019</td></tr>
<tr><td></td><td></td><td>WO            2016011433        A1</td><td>21 January 2016</td></tr>
<tr><td></td><td></td><td>CN            106664265        A</td><td>10 May 2017</td></tr>
<tr><td></td><td></td><td>EP            3195541        A2</td><td>26 July 2017</td></tr>
<tr><td></td><td></td><td>US            2017212210        A1</td><td>27 July 2017</td></tr>
<tr><td></td><td></td><td>US            2018183650        A1</td><td>28 June 2018</td></tr>
<tr><td></td><td></td><td>JP            2020128987        A</td><td>27 August 2020</td></tr>
<tr><td></td><td></td><td>JP            2022070874        A</td><td>13 May 2022</td></tr>
<tr><td></td><td></td><td>US            2016021670        A1</td><td>21 January 2016</td></tr>
<tr><td></td><td></td><td>US            2022303167        A1</td><td>22 September 2022</td></tr>
<tr><td></td><td></td><td>US            2019327124        A1</td><td>24 October 2019</td></tr>
<tr><td></td><td></td><td>EP            3695783        A1</td><td>19 August 2020</td></tr>
<tr><td></td><td></td><td>JP            2020144115        A</td><td>10 September 2020</td></tr>
<tr><td></td><td></td><td>JP            2021166704        A</td><td>21 October 2021</td></tr>
<tr><td></td><td></td><td>US            2019178980        A1</td><td>13 June 2019</td></tr>
<tr><td></td><td></td><td>JP            2017531811        A</td><td>26 October 2017</td></tr>
<tr><td>CN            113541744        A</td><td>22 October 2021</td><td>None</td><td></td></tr>
<tr><td>US            2022043103        A1</td><td>10 February 2022</td><td>EP            3864426        A1</td><td>18 August 2021</td></tr>
<tr><td></td><td></td><td>WO            2020074360        A1</td><td>16 April 2020</td></tr>
<tr><td></td><td></td><td>AU            2019356099        A1</td><td>18 March 2021</td></tr>
<tr><td></td><td></td><td>CN            112823289        A</td><td>18 May 2021</td></tr>
<tr><td>US            2022011394        A1</td><td>13 January 2022</td><td>EP            3899567        A1</td><td>27 October 2021</td></tr>
<tr><td></td><td></td><td>MX            2021007051        A</td><td>05 August 2021</td></tr>
<tr><td></td><td></td><td>WO            2020128760        A1</td><td>25 June 2020</td></tr>
<tr><td></td><td></td><td>CN            113167855        A</td><td>23 July 2021</td></tr>
</table>

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211186091